# EUROPEAN PATENT APPLICATION

(11) **EP 2 261 526 A1**
(43) Date of publication of application: **15.12.2010**
(21) Application number: 10155273.5
(22) Date of filing: 03.03.2010
(51) Int. Cl.: F16F 9/02, F16F 9/36

(54) **Gas cylinder, and especially gas spring**

(30) Priority: 09.06.2009 IT PN20090037
(71) Applicant: Bordignon Simone S.r.l., 36028 Rossano Veneto (VI) (IT)
(72) Inventor: Bordignon Simone, 36028 Rossano Veneto (VI) (IT)
(74) Representative: Giugni, Valter

(57) **Abstract**

The invention regards the sealing and guiding means which are interposed either between the rod (51) and the cylinder body (1) which form the gas spring, or between the piston and the cylinder inner chamber (2) enclosing the pressurized gas. The invention consists in the implementation of an unique dynamic spring performing both functions of guiding and sealing, and that therefore is comprised of two rings, one working as a mechanical resistance, and one working as a seal; said rings are mounted on the side of the dynamic ring which is not exposed to the friction or sliding action between the reciprocally moving bodies of the gas spring.
This includes a cylinder body with an inner chamber (2), a piston (4) sliding inside it, a cylindrical rod (51) engaged to a base of said piston and whose outer surface slides on the access mouth (3), wherein the sealing and guiding means comprise a first rigid cylindrical ring (10) located on the inner surface of said access mouth, a second rigid ring (11) arranged outside of said first ring, a third ring (12) mounted on the outer portion of said first ring and able of making up an hermetic closure between said first ring and the adjacent portion of said cylinder body, and wherein the outer sides of said second and third ring are into contact to said cylinder body.

## Description

The present invention refers to gas cylinders provided with improved devices for the gas sealing and for the rod guiding.

In the following of the instant description, in the attached relevant drawings and in the claims it will be particularly referred to gas springs, but it is understood that the invention in general applies to other means and devices, and in particular to the so called "strippers", which are basically constituted by a gas spring to which a punch has been properly added.

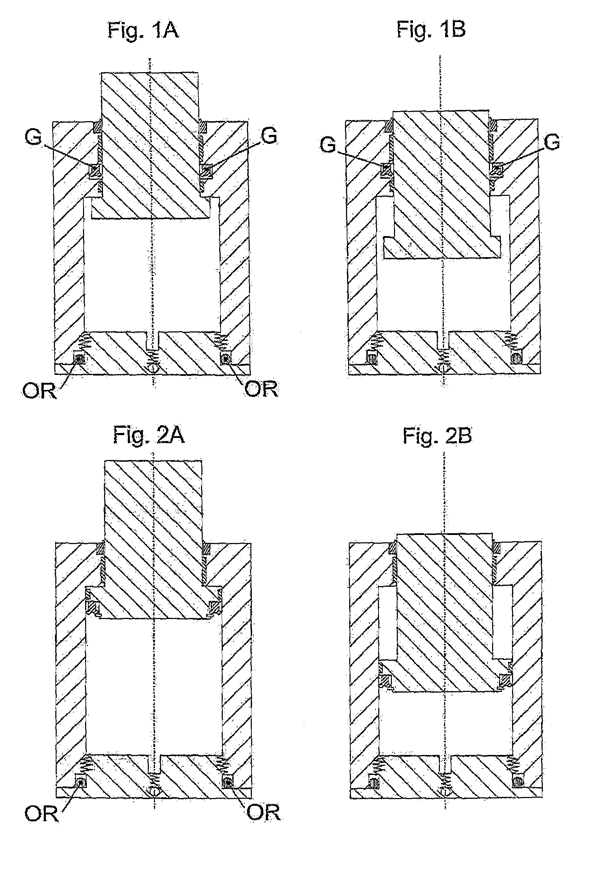

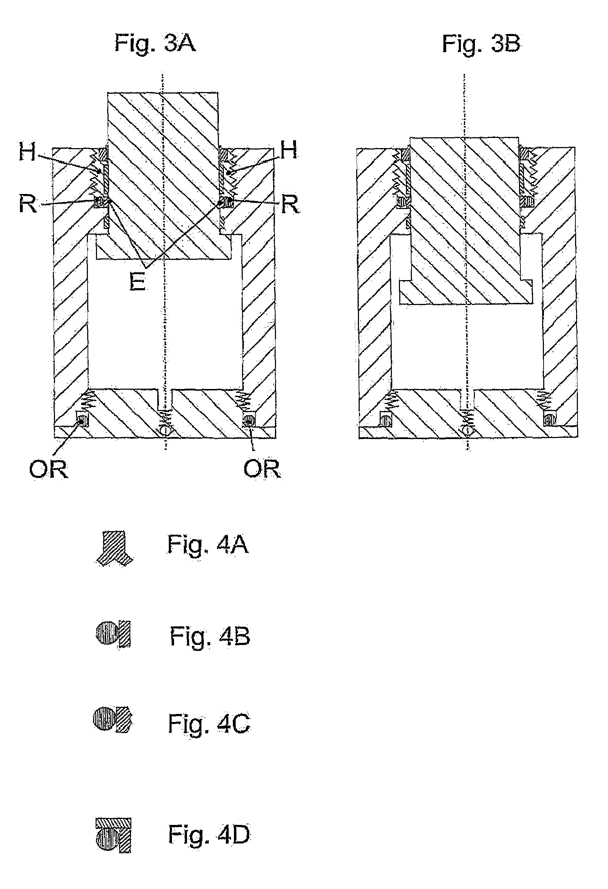

The prior art gas springs are of two types:
Type A) gas springs provided with a piston and related rod, one or more slots on the cylinder body. The rod, pushed by an outer force, moves up and down with respect to the cylinder. The slots may contain: one or more dynamic gaskets to seal the gas, one or more guiding bands, other devices as scraping rings, lubricant rings etc.
   In said type the dynamic gaskets are "fixed" on the cylinder body and slide on the rod, while the rod itself moves. According to the flexibility of the dynamic gaskets for the gas sealing, two assembly methods are used:
   - with flexible gaskets a kind closed slot is used (figures 1A, 1 B), which show two working conditions, i.e. one at rod extracted, and one at rod retracted)
   In this solution the gas is retained inside the gas spring by a dynamic gasket "G", on portion of which projects towards the rod, and by elastically pushing against it, prevents the pressurized gas from blowing by.
   On the opposite side the gas is retained by a static gasket, i.e. a O-Ring "OR".
   With rigid gaskets instead a kind of open slot is used (figures 3A, 3B) which shows 2 conditions, i.e. one at rod extracted, and one at rod retracted).
   In said case the gas is retained inside the gas spring by an o-ring "OR" or by other static gasket which, when pressed by a ring nut "H", is blocked in its position by a proper semi-rigid ring "E" arranged peripherically inside said static gasket "R".
   The gas is retained between the static gasket "E" and the rod as said semi-rigid ring "E" elastically pushes on the rod.
   On the opposite side the gas is retained by a static gasket, i.e. an O-Ring "OR".
Type B) The difference with respect to the Type A) springs consists in that in this case the piston hermetically closes the inner chamber portion, not involved by the rod motion, and therefore an hermetic seal between:
   the piston itself, or more precisely better between its outer cylindrical surface,
   and the cylindrical inner wall of the inner chamber of the cylinder itself,
   must be implemented.

With regard to the guiding function, on the surface of the cylinder body which is exposed to the rod motion one or more slots are made, which may lodge one or more guiding bands and other devices, as scraping rings, lubricating rings... etc.

In this case the gaskets of dynamic type are firm to the piston, and slide on the spring body with the piston motion. With this type of gas springs, both flexible and rigid dynamic gaskets for gas sealing are used (see figures 2A, 2B) which show two working conditions, one at rod extracted and one at rod inserted).

Also in this case, on the opposite side the gas is kept inside the gas spring inner chamber either by an O-ring "OR", or by a static gasket.

With regard to dynamic gaskets, these are made up with various shapes and methods known in the art, and for sake of simplicity and clarity these are symbolically given in the following figures:
- fig. 4A: flexible type gasket, mainly used with open slots. It is also called "lip gasket". It is formed in such a size so it may be compressed into the slot before of introducing the gas;
- Fig. 4B, 4C; rigid type gasket formed by 2 components: (i) almost rigid sealing ring which has to be mounted with interference on the rod, (ii) O-ring or other static gasket (i.e. x-ring, o-ring with squared profile, or other known means) which prevents the gas from passing outside the almost rigid sealing ring;
- Fig. 4D; as 4A, 4B, 4C with the addition of an "anti-extrusion ring" on the opposite side of the pressure side, in order to prevent the extrusion (lamination) of the o-ring when high pressures are used.

The above described solutions have proved to be relatively simple and effective.

However it was experienced that they show some constructional and functional drawbacks which here are briefly resumed:
- the spring body construction requires the making up a plurality of different slots; such condition obviously requires additional mechanical workings, with related burdens; in an industrial environment characterized by an extreme competitiveness, such burdens have progressively become unacceptable;
- a general vulnerability in the long time operation; in the facts said gas springs do prove serious limits with regards whether to the working speed (cycle/min), whether to the overall time duration, and to the working temperature;
- moreover when load forces inclined to the spring axis are involved, the specific construction of the today's gaskets and of the guiding means is not able of assuring a satisfactory preservation of the piston and rod motion direction with respect to the cylinder body.

It would therefore be desirable, and it is actually a main purpose of the present invention, to provide a solution for the implementation of a particular type of gas springs and of punch strippers able of avoiding the described drawbacks, and which be easy and simple to be produced and which may be made up with means available in the technique.

These aims, along with other features of the present invention, are reached in a gas spring made and operating as recited in the appended claims.

Features and advantages of the present invention will anyway be more readily and clearly understood from the description that is given below by way of nonlimiting example with reference to the accompanying drawings, in which:
- Figures 5A and 5B illustrate respective median axial sections of a first embodiment of a gas spring according to the present invention;
- Figure 5C shows an exploded section of the type of the gas spring of figures 5A and 5B,
- Figures 6A and 6B show respective median axial sections of a second embodiment of a gas spring according to the invention, in respective two working conditions,
- Figure 6C shows an exploded section of the gas spring of figures 6A, 6B,
- Figures 7A, 7B, 7C, 7D, 7E and 7F show different shapes of the sealing surface of a dynamic gasket in a gas spring according to the invention,
- Figure 8A shows the longitudinal section of the dynamic gasket according to an improved embodiment,
- Figures 8B, 8C, 8D, 8E, 8F show respective different embodiment of the sealing surface of the dynamic gasket of fig. 8A,
- Figure 9A is an enlargement of a longitudinal section of the dynamic gasket of fig. 6C,
- Figure 10 shows a median axial section of a punch stripper provided with two dynamic gaskets according to the invention.

In the following of the present description the term "inner" and "outer" relevant to a specific subject will be used; it is understood that such terms refer to the "X" axis of the cylinder externally defining the gas spring, and therefore the term "inner" refers to the subject orientation or side with respect to said axis, while the term "outer" refers to the subject orientation or side in the opposite sense, even if, as will be apparent, under certain circumstances such "outer" orientation may also mean an orientation towards to the cylinder body.

Moreover it is defined as "dynamic gasket" that type of gasket consisting of the sliding and friction body between two surfaces as, for example, between:
the inner surface of the access mouth into the cylinder body to enable the rod passage,
and the corresponding outer surface of the same rod,
or also between the piston outer surface and the inner surface of the cylinder chamber, where the compressed gas is contained.

To resume, the invention consists in the implementation of a particular type of dynamic gasket able of performing both functions of:
a) assuring the gas sealing, and
b) forming the piston, or the rod, guiding means, with respect to the cylinder body.

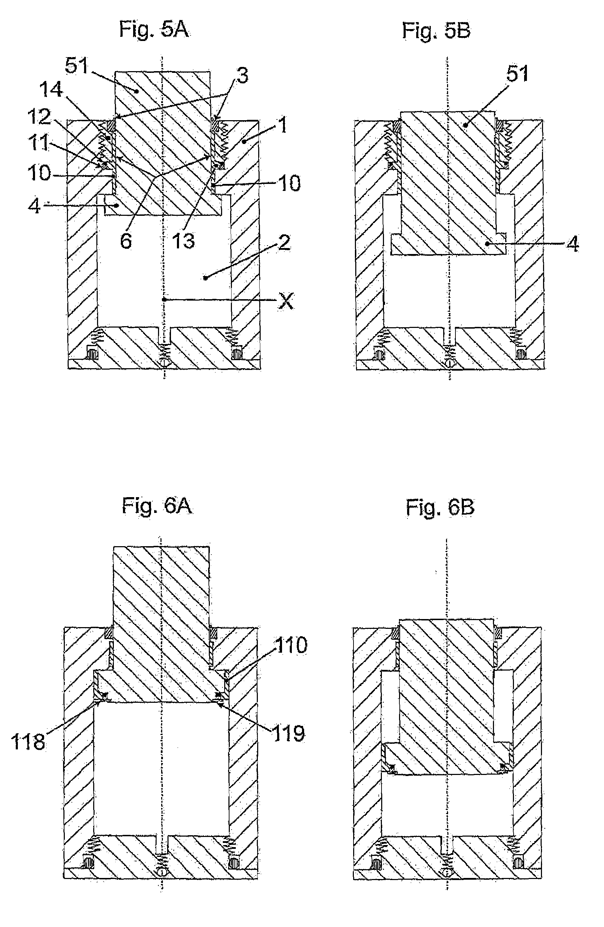

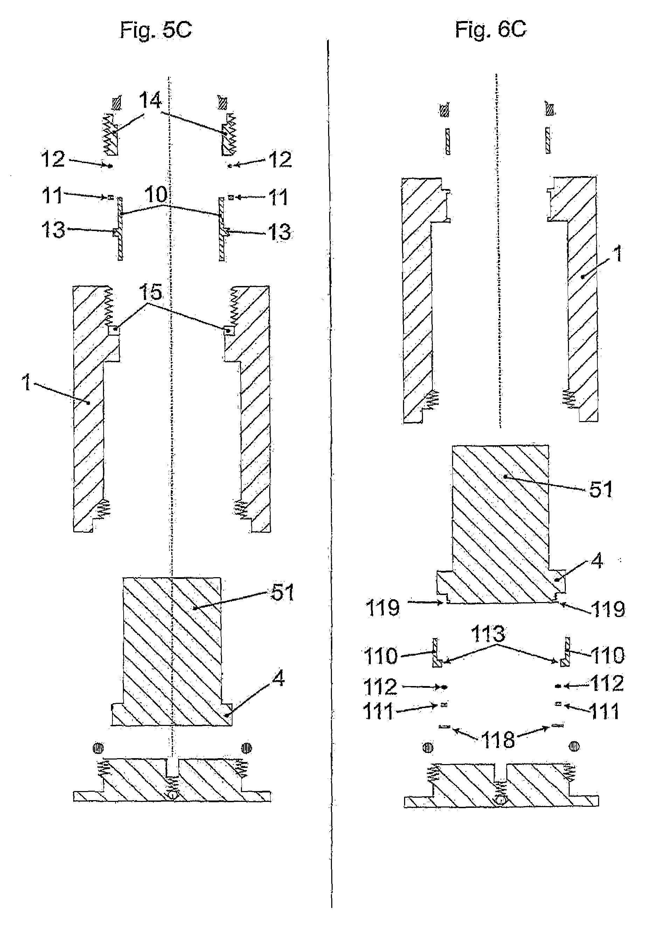

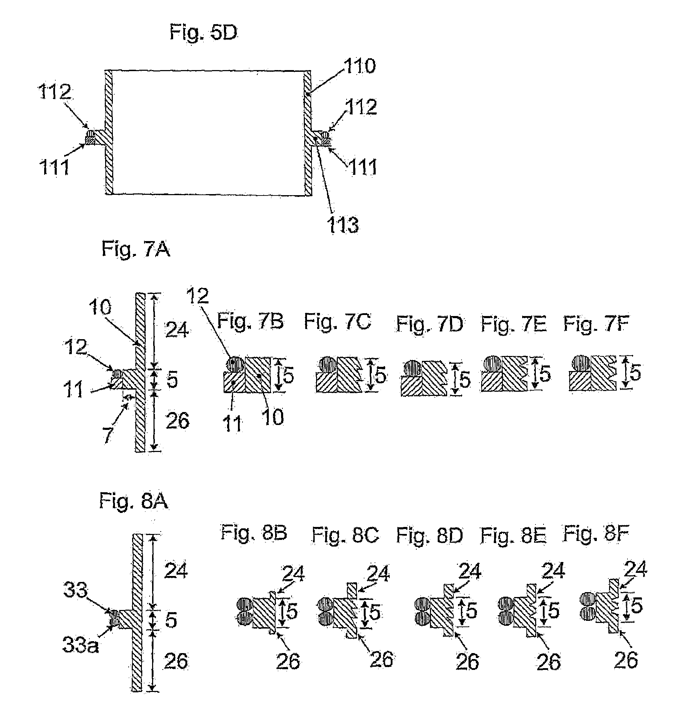

To this purpose, and with ref. to figures 5A, 5B and 5C a kind of gas spring with a dynamic gasket according to the invention is shown.

Usually said spring comprises:
- an outer cylinder 1, provided with an inner chamber 2,
- a cylindrical access mouth 3 whose axis is said "X" axis, arranged on one of the cylinder bases, and able of putting into communication the outside with said inner chamber 2,
- a cylindrical piston 4 inserted in a sliding way into said inner chamber 2,
- a cylindrical rod 51 mounted with one of its ends to a base of said piston 4, and sliding with its outer cylindrical surface 6 on said access mouth 3.

The gas spring according to the invention is provided with a first semi-rigid ring 10 arranged on the inner surface of the access mouth 3, so making up the dynamic gasket interposed between the cylinder body and the rod.

In order to assure both the sealing function and guiding function, on the outer perimeter of said first ring 10 are arranged:
- a second ring 11 substantially rigid and able of preventing outward distortions of the first ring,
- a third ring 12, preferably a static gasket, similar or equivalent to an O-ring, and able of making up a sealed closure between said first ring 10 and the adjacent portion of said cylinder 1.

As shown in the figures, the outer sides of said second and third ring are into contact to said cylinder.

So said assembly made of said first ring 10, said second ring 11 and said third ring 12 may assure both the guiding function, due to the mechanical resistance offered "on the back" of the first ring 10 by said second ring 11, and the sealing function due to the presence of the third ring 12, which prevents the gas under pressure from passing into the thin gap behind the first ring 10 and from escaping from it.

It will be now observed that the presence of a single first ring 10, which works as a poly-functional dynamic gasket, avoids the need of making up more distinct slots, and therefore it remarkably simplifies the gas spring mounting.

The just described invention allows a plurality of advantageous improvements:
- with reference to the same figures, said first ring 10 is provided outwards with a protruding portion 13; the purpose of said protruding portion is to anchor said first ring to the cylinder body, so as to avoid that the first ring itself be extruded, i.e. that it be squeezed or distorted, and even removed from its position, due to the friction effect on the rod and to the gas pressure.

Moreover usefully said protruding portion 13 is arranged in the central portion of said first ring, so as to avoid strong squeezing or extrusion forces on a surface which is too far from said protruding portion.

Moreover, as it will be clear from the following explanation, such improvement also allows a mounting and a quite useful lodging of said second and third ring 11, 12.

In order to achieve a regular operation of said second and third ring 11 and 12, that is these rings shall not exert their action in an unbalanced way with respect to said first and second ring, it comes out to be profitable that said first and second ring 11 and 12 are placed side by side and into contact to each other.

Moreover said second and third ring 11 and 12 are profitably arranged in correspondence and in contact to said protuberance, so that the force acting on the second ring, which works as a guide, be uniformly distributed along the first ring 10 width; and therefore it turns out useful that the third ring 12 to be placed into contact with said second ring 11, as in this way the possible gas leaks, which may escape from the zone taken by said second ring 11, are better limited.

With reference to the same figures 5A, 5B and 5C, the cylinder portion contouring said access mouth 3 is engaged by a ring nut 14; its function is to allow to easily access to the inner portion of the surface of the access mouth 3 to mount there said first ring 10, but mainly, before of mounting it, to apply said second and third ring 11 and 12.

So, with the following mounting sequence: first ring 10, second and third rings, --- ring nut 14 --- ; it becomes easy and quick to mount this portion of the gas spring according to the invention.

Profitably the mounting and blocking method of the ring nut 14 on the corresponding cylinder portion is the use of reciprocal threads.

To sum up, and from the constructional point of view, the inner surface of the ring nut 14 makes up a portion of the inner surface of said access mouth 3, and its outer surface is able of engaging a corresponding surface constituted on said cylinder.

Said first ring 10 is at least partially applied on the inner surface of said access mouth 3, and at least partially applied on the inner surface of said ring nut 14.

Said second and third ring 11, 12 are then necessarily arranged into a vane, symbolically identified by the No. 15 in fig. 5C, bound a) on its inner side, by said first ring 10, b) on a second side, by said ring nut 14, and c) on the remaining two sides, by respective portions of said cylinder body.
Figures 7A, 7B, 7C, 7D, 7E, 7F show different embodiments of the sealing surface 5 for the gasket. Figures 7B, 7C, 7D, 7E, 7F show the case wherein the length of the zones working as guiding bands (24, 26) are zero, and:
7A, 7B; the surface (5) is flat,
7C; the surface (5) owns two or more teeth whose apex is sharp-formed, even when teeth with different thickness are involved,
7D; the surface (5) owns two or more teeth whose apex is flat, also with different areas among the various teeth apexes, even when teeth with different thickness are involved,
7E; the surface (5) is flat with one or more "V" shaped notches;
7F; the surface (5) is flat with one or more "U" notches.

With ref. to Fig. 8A, for all the gas springs therein slowed, the relevant dynamic gaskets may be profitably made up with one or preferably two O-rings 33, 33A, without using the second ring, or rigid ring, 11.

In the facts it was experienced that the presence of two distinct O-rings obviously improves the gas sealing, and may effectively substitute the guiding function of the rigid ring 11 as said O-rings are intrinsically provided with a not negligible strength.

In general indeed the gas sealing between the surface 5 and the rod surface, (or the inner chamber surface, in case that springs with sealing rods are considered) during the gas introduction, is achieved by interference between the surface 5 and the rod, (or the chamber inner surface, when the just defined springs are considered)

When the gas spring is loaded, the gas sealing between the surface 5 and the rod surface, or the piston surface, is achieved both caused by said interference, and also caused by gas pressure.

Figures 8B, 8C, 8D, 8E, 8F represent respective embodiments of the dynamic gasket of fig. 8A, and differ from it
(i) for the side wings lengths, working as a guiding band having lengths 24, 26, with respect to said protruding portion 13; the lengths of said side wings may be longer than zero, but in an improved and more compact embodiment they also may be zero,
(ii) for the shape of the gasket sealing surface 5.

Indeed it may show, according to the type of the material which is used and to the working method, a flat, or a saw-tooth, or a truncated saw-tooth (Fig. 8D), or a "V", or a "U" shape.

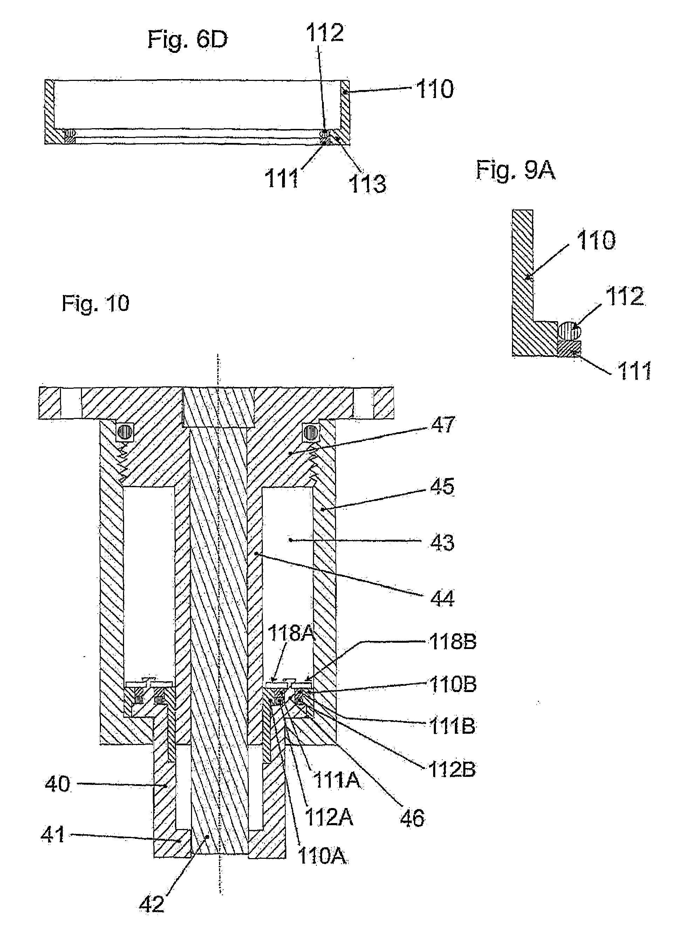

In the gas springs represented in figures 6A, 6B and 6C, the invention obviously regards the dynamic gaskets which ensure the sealing between the outer piston surface and the inner surface of the cylinder chamber 17.

In this case the sealing function, together with the contextual guiding function, are achieved in a technically similar way to what just described, even if using rings with obviously different shapes, due to the different configuration of the gas spring.

In this case the sealing and guiding functions are implemented through:
a first cylindrical and basically rigid ring 110, placed on the outer surface of said piston 4,
a second ring 111 which is substantially rigid, mounted on the inner portion of said first ring 110, and able of forcing it outwards,
a third ring 112 mounted on the inner portion of said first ring 110, and able of realizing an hermetic sealing between said first ring 110 and the adjacent portion of said piston 4; obviously in this case too the inner sides of said second and third ring 111, 112 are into contact to said piston.

Similarly to what provided for the different type spring, in the present case too said first ring 110 is given inwards a protruding portion 113, and said second and third rings 111, 112 are mounted on the inwards side of said protruding portion 113.

However, in order to avoid useless burdensome piston workings, in this case it is avoid of locating said protruding portion 113 in the middle of the first ring 110, but said portion is arranged to an end of it.

In such a way the piston construction becomes much simpler and quicker.

Moreover to assure the correct mounting of said rings, and their permanence in the expected position, the piston is provided with a fourth ring 118, "SEEGER" type, which is arranged, as shown in the figures, between a proper projection 119 radially extending from a piston base, and which makes up, with the remaining piston body, a suitable thin annular vane wherein said fourth ring 118 may be lodged and elastically firmed, as symbolically shown in the figures 6A, 6B and 6C.

Therefore said fourth ring 118 helps defining the vane, located inside said protruding portion 13, wherein the second and third rings 111, 112 are comprised; in any case the geometrical and mounting details of such components are fully and unambiguously identified by the drawings themselves, to which then it is sent back.

It will be clear to the man skilled in the art that the described invention mainly regards the dynamic gaskets mounted on the gas springs; however as gas activated punch strippers are also known, i.e. they are basically gas springs to which a respective punch has been properly mounted, it becomes obvious to extend the invention teaching to said devices too.

With ref. to fig. 10, it is here referred to a punch stripper comprising:
a punch-guide 40, provided with a lower portion 41 able of performing the function of a steel sheet blocking and of at least partially lodging inside it and in a sliding way the lower portion of a punch 42,
a gas spring acting between said punch and said punch guide, able of pushing said punch-guide 40,
a cylindrical annular chamber 43 defined between an inner hollow cylinder 44, and an outer cylinder 45,
an annular piston 46 placed between said inner hollow cylinder 44 and said outer cylinder 45,
a cylindrical punch-bearer plug 47, wherein said inner cylinder 44 at least partially lodges the lower portion of said punch 42,
wherein said annular piston 46 is firmly joined to said punch-guide 40.

In a known way, in correspondence to said annular piston, sealing means are provided which are able of granting the hermetic seal of said annular chamber.

As it can be easily noted, the annular piston 46 is in relationship with the inner hollow cylinder 44 and with the outer cylinder 45 in the same way, (figures 5A, 5B and 5C), the piston 4 is in relationship to the outer cylinder body; in other words, the piston slides on the cylinder wall, and more precisely in the instant case, on the two cylinders 44, 45 walls.

The equivalent guiding and sealing requirements have then to be met.

Therefore the same teachings, which have been previously considered, must be adopted, i.e. the gas spring according to the invention shall comprise:
a first ring 110A, a second ring 111 A, a third ring 112A and a fourth ring 118A having basically the same features, and reciprocal relationships, and working modes as already described, mounted on the inner side of said annular piston 46, with regard to the sliding of the annular piston 46 against the inner cylinder 44, and
a first ring 110B, a second ring 111B, a third ring 112B and a fourth ring 118B having basically the same features, and reciprocal relationships, and working modes as already described, mounted on the outer side of said annular piston 46, with regard to the sliding of the annular piston 46 against the outer cylinder 45.

In practice, it will be clear that the configurations of the rings 110A, 111A, 112A, 118A will be implemented in a fully corresponding ways to what specified with regard to the gas spring type of the figures 5A, 5B and 5C, and perfectly imaginable and implementable by any man skilled in the art.

Therefore for the sake of brevity they will not further detailed, as they have been actually explained with regard to the figures 5A, 5B and 5C.

Same reasoning obviously applies for the rings 110B, 111 B, 112B and 118B, and therefore the same conclusions apply.

At last it was experienced that the preferred material to make up said first rings, i.e. the rings provided with working (friction) surfaces, is a thermo-plastic material with high strength and high softening temperature; in particular such features may be found in the materials belonging to the family of the organic polymers or sulphonals, as polyetheretherketone; polyetherimide, polyphenilene sulphide; polyetherketoneketone; and in general to the family of thermo-plastic materials identified by the abbreviations PEEK; PEKK; PEK; PEI; PPS; PES.

It will be moreover apparent that a further specific and remarkable invention advantage: in the facts it avoids almost completely the presence of the sharp metal edges to make up the slots lodging the sealing and guiding means.

Such metal edges on the contrary must be presently in the today's technique to prevent the guiding bands from being extruded.

## Claims

1. Gas spring or gas stripper, with:
- an outer cylinder or body (1) provided with an inner chamber (2),
- a cylindrical access mouth (3) arranged, around a first axis (X), on one of said cylinder bases, and able of putting into communication the outside to said inner chamber (2),
- a cylindrical piston (4) sliding inserted into said chamber (2),
- a cylindrical rod (51) engaged with one of its ends to a base of said piston, (4), and sliding with its outer cylindrical surface (6) on said access mouth (3),
- sealing means able of providing the sealing between the outside and said inner chamber (2),
- guiding means able of granting the constancy of the parallelism of the moving direction of said rod (5) with respect to said first axis (X),
**characterized in that** said sealing means and said guiding means include:
- a first cylindrical and basically rigid ring (10) placed on the inner surface of said access mouth,
- a second ring (11) which is substantially rigid, mounted on the outer portion of said first ring (10), and able of providing a resistance against the radial distortion of said first ring,
- a third ring (12) mounted on the outer portion of said first ring (10) and able of making up a sealed closure between said first ring (10) and the adjacent portion of said body (1),
- wherein the outer sides of said second and third rings are into contact to said body.

2. Gas spring or gas stripper according to claim 1, **characterized in that** said first ring (10) is provided, outwards, with a protruding portion (13), and that said second and third rings (11, 12) are arranged on the side facing the outside of said protruding portion (13).

3. Gas spring or gas stripper according to claim 2, **characterized in that** said second and said third rings (11, 12) are placed side-by-side and into contact to each other.

4. Gas spring or gas stripper according to claim 2 or 3, **characterized in that** said protruding portion (13) is placed in the substantially central zone of said first ring (10).

5. Gas spring or gas stripper according to any of the previous claims, **characterized in that** said access mouth comprises a ring nut (14)
- whose inner cylindrical surface makes up at least a part of the inner surface of said access mouth (3),
- and provided with an outer surface able of engaging to a corresponding surface on said body,
- that said first ring (10) is at least partially mounted on the inner surface of said access mouth (3), and that at least partially mounted on the inner surface of said ring nut (14),
- and that second and third rings (11, 12) are placed into a room (15) delimited
a) on a side of it, by said first ring (10),
b) on a second side of it, by said ring nut (14),
c) on the remaining sides, by respective portions of said body.

6. Gas spring or gas stripper according to claim 4, **characterized in that** said ring nut (14) and said body are engaged to each other by a reciprocal thread.

7. Gas spring or gas stripper comprising:
- an outer cylinder or body (1),
- a cylindrical access mouth (3) arranged, around a axis (X), on one of said cylinder bases, and able of putting into communication the outside to said inner chamber (2),
- a cylindrical piston (4) sliding inserted into said chamber (2),
- a cylindrical rod (51) engaged with one of its ends to a base of said piston, (4), and sliding with its outer cylindrical surface (6) on said access mouth (3),
- sealing means able of providing the sealing between the outside and said inner chamber (2),
- guiding means able of granting the constancy of the parallelism of the moving direction of said rod (5) with respect to said axis (X), **characterized in that** said sealing means and said guiding means include:
- a first cylindrical and basically rigid ring (110) placed on the outer surface of said piston (4),
- a second ring (111) which is substantially rigid, mounted on the inner portion of said first ring (110), and able of providing a resistance outwards,
- a third ring (112) mounted on the inner portion of said first ring (110) and able of making up a sealed closure between said first ring (110) and the adjacent portion of piston (4),
- wherein the outer sides of said second and third rings are into contact to said piston.

8. Gas spring or gas stripper according to claim 7, **characterized in that** said first ring (110) is provided inwards with a protruding portion (113), and that said second and third rings (111, 112) are located on the side facing the inwards side of said protruding portion (113).

9. Gas spring or gas stripper according to claim 8, **characterized in that** said second and said third rings (111, 112) are arranged side-by-side and into contact to each other.

10. Gas spring or gas stripper according to claim 9, **characterized in that** said piston (4) is provided on one of its ends with a leaning projection (119), basically ring-shaped and oriented outwards, and that a fourth ring (118) is provided, which is able of being engaged by said leaning projection (119) and of retaining said first, second, and third rings (110, 111, 112).

11. Gas stripper comprising:
- a punch guide (40) provided with a lower portion (41) able of working as a stripper and of at least partially lodging into it and in a sliding way the lower portion of a punch (42),
- a gas spring working between said punch and said punch-guide, able of pushing said punch-guide (40),
- an annular cylindrical chamber (43), defined between an inner hollow cylinder (44) and said outer cylinder (45),
- a frame (47) supporting said punch, wherein said inner cylinder (44) lodges at least partially the lower portion of said punch (42),
- wherein said annular piston (46) is firmly connected to said punch-guide (40), and is provided with sealing means acting between said annular ring (46) and said inner (44) and outer (46) cylinders, **characterized in that** said sealing means do include a first, a second, a third and a fourth rings (110A, 111A, 112A, 118A) mounted on the inner side of said annular piston, and a first, a second, a third and a fourth rings (1108, 111 B, 112B, 118B) mounted on the outer side of said annular piston.

12. Gas spring or gas stripper according to any of the previous claims,
**characterized in that** said third ring (12, 112, 112A, 112B) replaces the second ring (11, 111, 111A, 111B).

13. Gas spring or gas stripper according to any of the previous claims,
**characterized in that** the lengths (24, 26) of the side wings of said first ring (10, 110, 110A, 110B), with respect of the respective said protruding portion (13, 113), are null (zero).

14. Gas spring or gas stripper according to any of the previous claims,
**characterized in that** said second ring (11, 111, 111A, 111B) is replaced by a further ring which is basically identical to the respective third ring (12, 112, 112A, 112B) so as to make up an assembly with two parallel, side-by-side, and basically identical rings (33, 33a).

15. Gas spring or gas stripper according to any of the previous claims,
**characterized in that** the shape of the sliding zone of said first ring (10, 110, 110A, 110B) shows a flat shape, or a tooth-saw shape, or a truncated tooth-shape, or is "U", or "V" shaped.

16. Gas spring or gas stripper according to any of the previous claims,
**characterized in that** said first ring (10, 110, 110A. 110B) is made up of plastic substances, belonging to the group of the organic polymers.

17. Gas spring or gas stripper according to claim 14, **characterized in that** said first ring is made of, or comprises, one of the following substances: polyetheretherketone; polyetherimide; polyphenilene sulphide; polyetherketoneketone, or one of the substances identified by the abbreviations PEEK; PEKK; PEK; PEI; PPS; PSU; PPSU; PES.

## Amended claims

### Amended claims in accordance with Rule 137(2) EPC.

**1.** Gas spring or gas stripper, with:
- an outer cylinder or body (1) provided with an inner chamber (2),
- a cylindrical access mouth (3) arranged, around a first axis (X), on one of said cylinder bases, and able of putting into communication the outside to said inner chamber (2),
- a cylindrical piston (4) sliding inserted into said chamber (2),
- a cylindrical rod (51) engaged with one of its ends to a base of said piston, (4), and sliding with its outer cylindrical surface (6) on said access mouth (3),
- sealing means able of providing the sealing between the outside and said inner chamber (2),
- guiding means able of granting the constancy of the parallelism of the moving direction of said rod (5) with respect to said first axis (X),
**characterized in that** said sealing means and said guiding means include:
- a first cylindrical and basically rigid ring (10) placed on the inner surface of said access mouth,
- a second ring (11) which is substantially rigid, mounted on the outer portion of said first ring (10), and able of providing a resistance against the radial distortion of said first ring,
- a third ring (12) mounted on the outer portion of said first ring (10) and able of making up a sealed closure between said first ring (10) and the adjacent portion of said body (1),
- wherein the outer sides of said second and third rings are into contact to said body,
- and **in that** said first ring (10) is provided, outwards, with a protruding portion (13), and that said second and third rings (11, 12) are arranged on the side facing the outside of said protruding portion (13).

**2.** Gas spring or gas stripper according to claim 1, **characterized in that** said second and said third rings (11, 12) are placed side-by-side and into contact to each other.

**3.** Gas spring or gas stripper according to claim 1 or 2, **characterized in that** said protruding portion (13) is placed in the substantially central zone of said first ring (10).

**4.** Gas spring or gas stripper according to any of the previous claims, **characterized in that** said access mouth comprises a ring nut (14)
- whose inner cylindrical surface makes up at least a part of the inner surface of said access mouth (3),
- and provided with an outer surface able of engaging to a corresponding surface on said body,
- that said first ring (10) is at least partially mounted on the inner surface of said access mouth (3), and that at least partially mounted on the inner surface of said ring nut (14),
- and that second and third rings (11, 12) are placed into a room (15) delimited
a) on a side of it, by said first ring (10),
b) on a second side of it, by said ring nut (14),
c) on the remaining sides, by respective portions of said body.

**5.** Gas spring or gas stripper according to claim 4, **characterized in that** said ring nut (14) and said body are engaged to each other by a reciprocal thread.

**6.** Gas spring or gas stripper comprising:
- an outer cylinder or body (1),
- a cylindrical access mouth (3) arranged, around a axis (X), on one of said cylinder bases, and able of putting into communication the outside to said inner chamber (2),
- a cylindrical piston (4) sliding inserted into said chamber (2),
- a cylindrical rod (51) engaged with one of its ends to a base of said piston, (4), and sliding with its outer cylindrical surface (6) on said access mouth (3),
- sealing means able of providing the sealing between the outside and said inner chamber (2),
- guiding means able of granting the constancy of the parallelism of the moving direction of said rod (5) with respect to said axis (X), **characterized in that** said sealing means and said guiding means include:
- a first cylindrical and basically rigid ring (110) placed on the outer surface of said piston (4),
- a second ring (111) which is substantially rigid, mounted on the inner portion of said first ring (110), and able of providing a resistance outwards,
- a third ring (112) mounted on the inner portion of said first ring (110) and able of making up a sealed closure between said first ring (110) and the adjacent portion of piston (4),
- wherein the outer sides of said second and third rings are into contact to said piston.

**7.** Gas spring or gas stripper according to claim 6, **characterized in that** said first ring (110) is provided inwards with a protruding portion (113), and that said second and third rings (111, 112) are located on the side facing the inwards side of said protruding portion (113).

**8.** Gas spring or gas stripper according to claim 7, **characterized in that** said second and said third rings (111, 112) are arranged side-by-side and into contact to each other.

**9.** Gas spring or gas stripper according to claim 8, **characterized in that** said piston (4) is provided on one of its ends with a leaning projection (119), basically ring-shaped and oriented outwards, and that a fourth ring (118) is provided, which is able of being engaged by said leaning projection (119) and of retaining said first, second, and third rings (110, 111, 112).

**10.** Gas spring or gas stripper according to any of the previous claims, **characterized in that** the lengths (24, 26) of the side wings of said first ring (10, 110), with respect of the respective said protruding portion (13, 113), are null (zero).

**11.** Gas spring or gas stripper according to any of the previous claims, **characterized in that** said second ring (11, 111) is replaced by a further ring which is basically identical to the respective third ring (12, 112) so as to make up an assembly with two parallel, side-by-side, and basically identical rings (33, 33a).

**12.** Gas spring or gas stripper according to any of the previous claims, **characterized in that** the shape of the sliding zone of said first ring (10, 110) shows a flat shape, or a tooth-saw shape, or a truncated tooth-shape, or is "U", or "V" shaped.

**13.** Gas spring or gas stripper according to any of the previous claims, **characterized in that** said first ring (10, 110) is made up of plastic substances, belonging to the group of the organic polymers.

**14.** Gas spring or gas stripper according to claim 13, **characterized in that** said first ring is made of, or comprises, one of the following substances: polyetheretherketone; polyetherimide; polyphenilene sulphide; polyetherketoneketone, or one of the substances identified by the abbreviations PEEK; PEKK; PEK; PEI; PPS; PSU; PPSU; PES.
